# EUROPÄISCHE PATENTSCHRIFT

(11) **EP 1 003 988 B1**
(45) Veröffentlichungstag und Bekanntmachung des Hinweises auf die Patenterteilung: **09.10.2002**
(21) Anmeldenummer: 99936346.8
(22) Anmeldetag: 28.05.1999
(51) Int. Cl.: F16K 1/00

(54) **KALIBRIERVERFAHREN**
CALIBRATION METHOD
PROCEDE D'ETALONNAGE

(30) Priorität: 15.06.1998 DE 19826578
(43) Veröffentlichungstag der Anmeldung: 31.05.2000
(73) Patentinhaber: SIEMENS AKTIENGESELLSCHAFT, 80333 München (DE)
(72) Erfinder: SPAHN, Wolfgang, D-97737 Gemünden (DE); STRAUSS, Klemens, D-97833 Frammersbach (DE)
(86) Internationale Anmeldenummer: DE9901576
(87) Internationale Veröffentlichungsnummer: WO99066235

(56) Entgegenhaltungen:
- DE-A- 3 126 246
- DE-A- 4 305 789
- DE-A- 19 710 051
- US-A- 4 763 091
- US-A- 5 417 403
- PATENT ABSTRACTS OF JAPAN vol. 1995, no. 04, 31. Mai 1995 (1995-05-31) & JP 07 027246 A (NISSIN KOGYO KK), 27. Januar 1995 (1995-01-27)

## Beschreibung

Die Erfindung betrifft ein Kalibrierverfahren zur Einstellung des Luftspaltes eines Magnetventils und eine Vorrichtung zur Durchführung dieses Verfahrens.

Derartige Magnetventile haben einen Ventilkörper, der mittels eines Stößels mittelbar oder unmittelbar betätigbar ist. Der Stößel durchsetzt eine Axialbohrung eines Gehäusekerns, und ist an seinem vom Ventilkörper entfernten Endabschnitt mit einem Anker verbunden, der in seiner federvorgespannten Grundposition einen Axialspalt mit dem Gehäusekern bildet. Letzterer ist von einem Spulenkörper umgeben und in einen Aufnahmeraum eines Gehäuses eingesetzt, dessen Gehäusemantel als Flußleitmantel dient, der den Spulenkörper umgibt.

Zur Einstellung des Axialspaltes wird in der DE-OS 31 26 246 vorgeschlagen, den Magnetanker bis zu einem Anschlag auf den Stößel aufzuschieben und danach auf dem Stößel festzulegen, so daß der Anker in Axialrichtung gesichert ist. Der axiale Luftspalt zwischen dem Magnetanker und dem Gehäusekern wird durch einen Abstandsring eingestellt, der zwischen den Flußleitmantel und einen den Stößel in seine Grundposition vorspannende Scheibenfeder eingesetzt wird. Die Materialstärke des Abstandsringes bestimmt somit den Axial-Luftspalt. Da der Stößel in seiner Grundposition durch die Scheibenfeder gegen einen Ventilsitz vorgespannt ist, muß dieser in Axialrichtung verstellbar ausgebildet werden, so daß der axiale Luftspalt und der Strömungsquerschnitt am Ventilsitz zueinander korreliert werden können.

Für ein derartiges Ventil müssen eine Vielzahl von Abstandsringen zur Verfügung gestellt werden, um den erforderlichen Luftspalt in Abhängigkeit von den Fertigungstoleranzen einstellen zu können. Des weiteren ist die Aufnahme des Ventilsitzes vergleichsweise aufwendig gestaltet, so daß der vorrichtungs- und fertigungstechnische Aufwand erheblich ist.

Zur Beseitigung dieser Nachteile wird in der DE 43 05 789 A1, aus der ein Verfahren und eine Vorrichtung gemäß dem Oberbegriff der Ansprüche 1 bzw. 10 bekannt sind, ein Magnetventil vorgeschlagen, bei dem der Anker lediglich mittels eines Preßsitzes auf den Stößel festgelegt ist. Der Anker hat zumindest einen axialen Durchbruch. Zur Kalibrierung dieses Magnetventiles wird der Stößel auf einem Ventilsitz (Sitzventil) oder einem Anschlag (Schieberventil) abgestützt und der Anker durch ein Montagewerkzeug auf den Stößel aufgeschoben. Dabei durchsetzt ein Abstandsdorn des Montagewerkzeugs den axialen Durchbruch und ist um ein dem Luftspalt entsprechendes Maß länger als die Axiallänge des Ankers ausgeführt. Beim Aufpressen des Magnetankers gelangt der Abstandsdorn in Anlage an die benachbarte Stirnfläche des Gehäusekerns, so daß in dieser Position über das Längenmaß des Abstandsdornes der Luftspalt eingestellt ist, ohne daß zusätzliche Abstandsringe oder eine axiale Verstellbarkeit des Ventilsitzes erforderlich ist.

Auch beim Einsatz dieses Ventils stellt sich heraus, daß es äußerst schwierig ist, den axialen Luftspalt mit der erforderlichen Genauigkeit einzustellen, so daß eine hinreichende Korrelation zwischen dem Öffnungsquerschnitt des Ventils und dem axialen Luftspalt nicht mit der erforderlichen Genauigkeit definiert werden kann.

Demgegenüber liegt der Erfindung die Aufgabe zugrunde, ein Verfahren zum Kalibrieren eines Magnetventils, durch das bei minimalem verfahrenstechnischen Aufwand die Einstellung des Luftspaltes zwischen dem Anker und dem Gehäusekern eines Magnetventils einstellbar ist, und eine entsprechende Vorrichtung zum Kalibrieren zu schaffen.

Diese Aufgabe wird durch ein Verfahren mit den Merkmalen des Patentanspruchs 1 bzw. durch eine Vorrichtung mit den Merkmalen des Patentanspruches 10 gelöst.

Durch die Maßnahme, den Anker zum Einstellen des Luftspaltes auf eine auswechselbare Distanzscheibe aufzulegen, die ihrerseits an der benachbarten Stirnfläche des Gehäusekerns abgestützt ist und den Stößel in den aufliegenden Anker einzuschieben, bis er eine vorbestimmte Anlageposition am Ventilkörper erreicht hat, wird die Einheit aus Stößel und Anker im wesentlichen über den letzteren abgestützt, so daß auf den Stößel nur noch die zur Axialverschiebung erforderlichen Kräfte wirken. Die elastische Verformung des Stößels während des Zusammenfügens mit dem Anker wird dabei auf ein Minimum beschränkt, so daß dieser nach dem Nachlassen der zum Einschieben erforderlichen Kraft nur unwesentlich zurückfedert und dadurch der Luftspalt auf dem zuvor eingestellten Maß verbleibt.

Zur Voreinstellung der Relativposition zwischen dem Stößel und Anker wird bei einem bevorzugten Ausführungsbeispiel ein Abstandshalter von ventilsitzseitigen Endabschnitt des Gehäuses in die Stößelaufnahmebohrung eingesetzt und der Stößel auf diesem Abstandshalter abgestützt. Dies erfolgt vorzugsweise auf einer Vorrichtung gemäß Anspruch 10. Das Maß des Abstandshalters ist so gewählt, daß der Stößel bei dieser Vormontage in einem vorbestimmten Axialabstand zum Ventilsitz verbleibt. Die endgültige Positionierung des Stößels erfolgt dann - wie vorher beschrieben - erst nachdem der Anker auf der Stirnseite des Gehäusekerns abgestützt ist. Die Montage und Kalibrierung des Ventils ist weiter vereinfacht, wenn der Ventilsitz als Einsatzstück ausgeführt ist, das nach der Vormontage des Stößels und nach dem Entfernen des Abstandshalters in eine Aufnahme des Gehäuses eingesetzt wird.

Zur Fixierung der Relativposition zwischen Stößel und Anker kann letzterer mit einer Bördelung ausgeführt werden, die nach der endgültigen Einstellung der Relativposition hergestellt wird.

Bei einem bevorzugten Ausführungsbeispiel wird der Gehäusekern als Polkern ausgeführt, der als zusätzliches Bauteil in eine Aufnahme des Ventilgehäuses eingesetzt ist.

Zur Vereinfachung der Gehäusekonstruktion kann in das Gehäuse eine Polscheibe eingesetzt werden, die den Polkern radial außen liegend umkreist und ebenfalls einen Teilbereich des Spaltes begrenzt. Diese Polscheibe wirkt als Teil des Flußleitmantels.

Die Verbindung des Einsatzstückes bzw. der Polscheibe mit dem Gehäuse und/oder des Stößels mit dem Anker erfolgt vorzugsweise durch plastische Verformung, beispielsweise durch Verstemmen oder Bördeln.

Sonstige Weiterbildungen der Erfindung sind Gegenstand der weiteren Unteransprüche.

Im folgenden werden bevorzugte Ausführungsbeispiele der Erfindung anhand schematischer Zeichnungen näher erläutert. Es zeigen:
Figuren 1 und 2 zwei stark vereinfachte Schnitte durch ein Magnetventil zur Erläuterung des erfindungsgemäßen Kalibrierverfahren und
Fig. 3 einen Längsschnitt durch ein Ausführungsbeispiel eines Magnetventils.

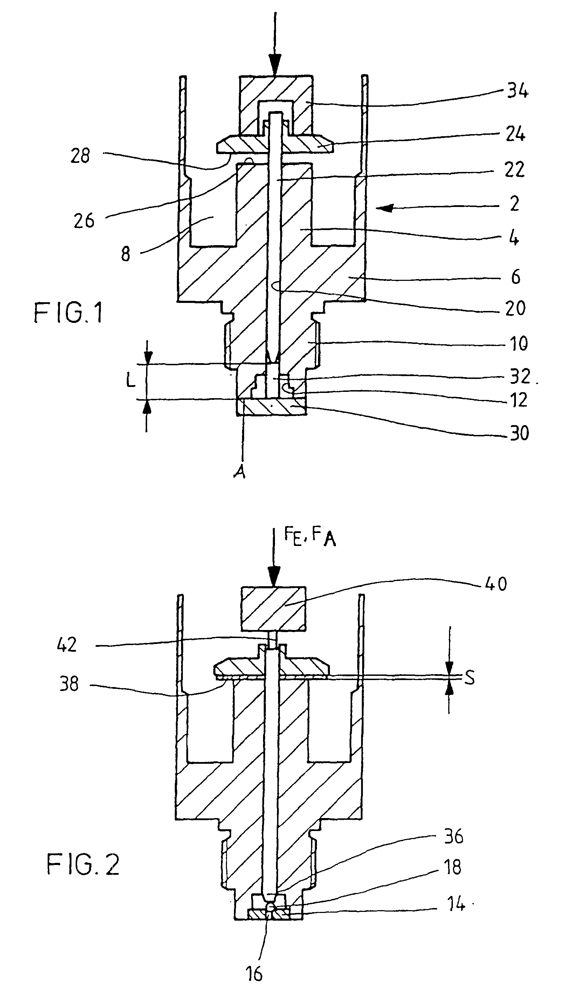

Das Grundprinzip des erfindungsgemäßen Kalibrierverfahrens sei zunächst anhand der schematisierten Darstellungen der Figuren 1 und 2 erläutert.

Diese zeigen einen Schnitt durch ein Magnetventil mit einem Gehäuse 2, das einen topfförmigen Aufbau hat. Das Gehäuse 2 hat einen Gehäusekern 4, der als nabenförmiger Vorsprung in einem zylinderförmigen Gehäusetopf 6 ausgeführt ist. Der Gehäusekern 4 und der Gehäusetopf 6 begrenzen einen ringförmigen Raum 8, der zur Aufnahme eines nicht dargestellten Spulenkörpers dient.

An dem in Fig. 1 unteren Endabschnitt des Gehäusetopfes 6 erstreckt sich koaxial zum Gehäusekern 4 ein Einschraubbund 10, in dem eine Aufnahme 12 für ein in Fig. 2 dargestelltes Einsatzstück 14 ausgebildet ist. Letzteres bildet einen Ventilsitz 16 für einen Ventilkörper 18.

Am Außenumfang des Einschraubbundes 10 ist ein Außengewinde zum Einschrauben in einen Gehäuseblock oder in ein sonstiges Gehäuse ausgebildet.

Das Gehäuse 2 wird in Axialrichtung von einer Stößelaufnahmebohrung durchsetzt, in der ein Stößel 22 gleitend geführt ist. Auf diesem ist ein Anker 24 mit einem Preßsitz befestigt. Dabei durchsetzt der Stößel 22 den Anker 24.

In der in Fig. 2 dargestellten Grundposition wird der Anker 24 mit dem Stößel 22 durch Federvorspannung gegen den Ventilkörper 18 gedrückt, so daß dieser am Ventilsitz 16 aufliegt und eine Verbindung zwischen einem axialen Eingangsanschluß und einem nicht dargestellten radialen Ablaufanschluß versperrt. In dieser Grundposition muß zwischen der Stirnfläche 26 des Gehäusekerns 4 und der benachbarten Großfläche 28 des Ankers ein Luftspalt verbleiben, der in Fig. 2 mit der Breite S gekennzeichnet ist.

Zur Einstellung dieses Luftspaltes mit der Breite S wird ein Abstandshalter 30 im Bereich der Aufnahme 12 abgestützt. Der Abstandshalter 30 kann Teil einer Kalibriervorrichtung sein. Dieser hat einen Anlagezapfen 32, der in die Stößelaufnahmebohrung 20 eintaucht.

Zur Einstellung des Spaltmaßes S wird der Stößel 22 zunächst in seine in Fig. 1 dargestellte Anlageposition an der Stirnfläche des Anlagezapfens 32 gebracht. Die Axiallänge L des Anlagezapfens 32 ist dabei derart ausgelegt, daß die Spitze des Stößels 22 in einem derartigen Abstand zum Ventilsitz 16 steht, daß der Stößel 22 auch bei eingesetztem Einsatzstück 14 nicht auf dem Ventilkörper 18 aufliegen würde.

Anschließend wird das Gehäuse 2 mit dem Abstandshalter 30 und dem eingesetzten Stößel 22 auf einer Unterlage abgestützt und der Anker 24 mittels einer Preßhülse 34 aufgeschoben, bis die beiden Stirnflächen 26, 28 aneinander anliegen. Der Anker 24 liegt dann auf dem Gehäusekern 4 auf.

Die Preßhülse 34 wirkt dabei auf die Rückseite des Ankers 24, während der Stößel 22 auf dem Anlagezapfen 32 des Abstandshalters 30 abgestützt ist. Nach Erreichen der Anlageposition der beiden Stirnflächen 28, 26 werden die Preßhülse 34 und der Abstandshalter 30 abgenommen und das Einsatzstück 14 mit dem Ventilkörper 18 eingesetzt.

Zwischen den Stirnflächen 28 und 26 des Ankers 24 und des Gehäusekerns 4 wird eine Distanzscheibe 38 eingefügt, die vorzugsweise aus einem nichtmagnetisierbaren Material, beispielsweise Messing besteht. Nach dem Einsetzen des Distanzscheibe 38 befindet sich die Spitze 36 des Stößels 22 aufgrund des eingestellten Abstandsmaßes L im Axialabstand zum Ventilkörper 18, so daß der Stößel 22 weiter zum Ventilkörper 18 hin bewegt werden muß. Dazu wird ein Preßstempel 40 angesetzt, dessen Vorsprung 42 etwa den gleichen Durchmesser wie der Stößel 22 hat und somit in die Durchgahgsbohrung des Ankers 24 eintauchen kann. Über den Preßstempel 40 wird eine Einschubkraft F_{E} aufgebracht, die groß genug ist, um die Flächenpressung zwischen Anker 24 und Stößel 22 zu überwinden, so dieser in Axialrichtung hin zum Ventilkörper 18 bewegt wird, bis er in Anlage an diesen gelangt. Nach Erreichen der Anlageposition wird die Einschubkraft F_{E} um ein vorbestimmtes Maß, beispielsweise 500 N auf eine Anlagekraft FA erhöht, um sicher zu sein, daß der Stößel 22 an dem Ventilkörper 18a liegt. Während dieses Preßvorganges ist der Anker 24 über die Distanzscheibe 38 am Gehäusekern 4 abgestützt, so daß der Stößel 22 gegenüber der herkömmlichen Lösung nur mit sehr geringen Kräften beaufschlagt wird (max FA).

Anschließend kann der Anker 24 mit dem Stößel 22, beispielsweise durch Verbördeln, verbunden werden. Die Distanzscheibe 38 wird entfernt und der Spulenkörper mit den elektrischen Anschlüssen, einem Gehäusedeckel und einer den Anker 24 beaufschlagenden Druckfeder montiert.

Bei der vorbeschriebenen Vorgehensweise wird das Einsatzstück 14 selbstverständlich mittels einer Anlage an einer Vorrichtung derart abgestützt, daß es durch die Anlagekraft FA nicht aus seiner Sollposition herausbewegbar ist.

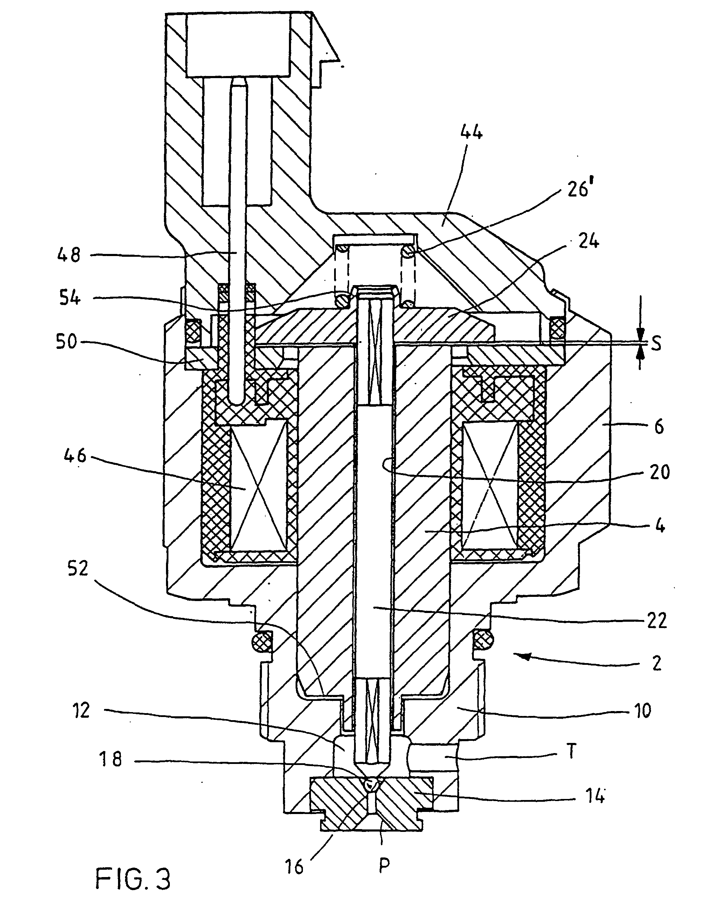

In Fig. 3 ist ein Ausführungsbeispiel eines Magnetventils dargestellt, das beispielsweise als Druckbegrenzungsventil in Common-Rail-Einspritzsystemen verwendet werden kann.

Dieses Magnetventil wird ausführlichst in der parallelen Anmeldung P... der Anmelderin mit dem internen Aktenzeichen MA7254 beschrieben, so daß hinsichtlich konstruktiver Details der Einfachheit halber auf dieser Ausführungen verwiesen wird, und hier nur die zum Verständnis erforderlichen Elemente beschrieben werden.

Im folgenden werden für einander entsprechende Bauelemente die gleichen Bezugszeichen wie in den Figuren 1 und 2 verwendet.

Gemäß Fig. 3 hat das Magnetventil einen Gehäusetopf 6, an dem ein Einschraubbund 10 ausgebildet ist. Dieser hat eine Aufnahme 12, in die ein Einsatzstück 14 eingesetzt ist. Im Einsatzstück 14 ist ein Ventilsitz 16 ausgebildet, gegen den ein Ventilkörper 18 vorgespannt ist. Über diesen läßt sich eine Verbindung zwischen einem Eingangsanschluß P und einem radialen Tankanschluß T aufsteuern, der in der Aufnahme 12 mündet.

Auf den Ventilkörper 16 wirkt ein Stößel 22, der in einer Stößelaufnahmebohrung 20 eines Polkerns 4 geführt ist. An dem rückwärtig aus dem Polkern 4 herausragenden Endabschnitt des Stößels 22 ist ein Anker 24 befestigt, der über eine Druckfeder 26' in seine dargestellte Grundposition vorgespannt ist, in der der Ventilkörper 18 über den Stößel 22 und den Anker 24 gegen den Ventilsitz 16 vorgespannt ist. Die Druckfeder 26' ist an einem Kunststoffdeckel 44 abgestützt, über den der Gehäusetopf 6 rückwärtig verschlossen ist.

In einem Ringraum zwischen dem Gehäusetopf 6 und dem Polkern 4 ist ein Spulenkörper 46 angeordnet, dessen Anschlußpins 48 den Deckel 44 zumindest abschnittsweise durchsetzen.

Der ankerseitige Endabschnitt des Polkerns 4 wird von einer Polscheibe 50 umgriffen, deren zum Anker 24 weisende Großfläche einen Teilbereich des Luftspaltes (Spaltmaß S) begrenzt.

Wie des weiteren aus Fig. 3 hervorgeht, ist die Axialbewegung des Polkerns 4 durch eine ventilsitzseitige Anlageschulter 52 begrenzt, so daß diese praktisch einen Anschlag für die Polkernbewegung in Richtung zum Ventilsitz 16 ausbildet.

Vor dem Befestigen der Polscheibe 50 wird der Spulenkörper 46 mit den Steckerpins 48 oder zumindest den dafür vorgesehenen Aufnahmen in den Ringraum zwischen Polkern 4 und Gehäusetopf 6 eingelegt.

Zur Montage des Magnetventils werden zunächst die Polscheibe 50 und der Polkern 4 in den Gehäusetopf 6 derart eingesetzt, daß deren ankerseitige Stirnflächen in Radialrichtung miteinander fluchten. Dieses Maß kann durch eine geeignete Lehre oder einen geeigneten Einpreßstempel realisiert werden.

Der Polkern 4 ist dabei vorzugsweise durch einen Preßsitz in dem Gehäusetopf 6 festgelegt. Die Polscheibe 50 kann durch plastische Verformung, beispielsweise durch Verstemmen mit dem Gehäusetopf 6 verbunden werden. Selbstverständlich sind auch andere Befestigungsmethoden einsetzbar. Wichtig ist, daß die bündige Anordnung der Großflächen auch bei hohen Drücken beibehalten bleibt.

Anschließend wird der in Fig. 1 dargestellte Abstandshalter 30 von unten her in die Aufnahme 12 eingesetzt und der Stößel 22 eingeschoben. Daraufhin wird dann der Anker 24 mittels der Preßhülse 34 aufgepreßt, bis er an der benachbarten Stirnfläche des Polkerns 4 anliegt. Dieser Ablauf ist auch in einer separaten Vorrichtung durchführbar.

Nach Abnehmen des Abstandshalters 30 wird das Einsatzstück 14 mit dem Ventilkörper 16 in die Aufnahme 12 eingesetzt und mit dem Gehäusetopf 6 verbunden. Dieses Verbinden kann beispielsweise durch Verstemmen erfolgen. Nach Einfügen der Distanzscheibe 38 zwischen den Anker 24 und den Polkern 4 wird der Preßstempel 40 angesetzt und der Stößel 22 bei auf dem Polkern 4 aufliegenden Anker 24 in seiner Anlageposition am Ventilkörper 18 gebracht. Nach Erreichen der Anlageposition wird die auf den Preßstempel 40 wirkende Kraft auf die Anlagekraft FA erhöht, so daß ein sicheres Anliegen des Stößels 22 an den Ventilkörper 18 garantiert ist.

Zur Lagefixierung ist der Anker 24 mit einer Bördelung 54 versehen, die nach der Einstellung des Spaltmaßes S derart hergestellt wird, daß sie den Endabschnitt des Stößels 22 in der in Fig. 3 dargestellten Weise umgreifen, so daß eine Axialverschiebung zwischen Anker 24 und Stößel 22 verhindert ist.

Nach der Entnahme der Distanzscheibe 38 wird die Druckfeder 26' angesetzt und der Gehäusetopf 6 mit dem Deckel 44 verschlossen. Dabei sind die Steckerpins 48 dichtend im Deckel 44 aufgenommen.

Durch die erfindungsgemäße Abstützung des Ankers 24 auf dem Gehäuse- oder Polkern 4 können die auf den Stößel 22 wirkenden Kräfte minimiert werden, so daß dessen elastische Verformung und Rückfederung bei der Auslegung des Luftspaltes auf einfache Weise unabhängig von den Fertigungstoleranzen berücksichtigt werden können.

Die erfindungsgemäße Einstellung des Luftspaltes oder Polabstandes S ermöglicht es, die Magnetkraft und somit die Drucktoleranz mit hoher Präzision einzustellen.

Das vorbeschriebene Kalibrierverfahren ist selbstverständlich nicht nur für die Kalibrierung von Sitzventilen vorgesehen, sondern es können auch in gleicher Weise Schieberventile eingestellt werden.

Offenbart ist ein Kalibrierverfahren zur Einstellung eines Axialluftspaltes zwischen einem Anker und einem Gehäusekern, wobei der Anker während des Kalibriervorganges auf dem Gehäusekern abgestützt ist und ein mit dem Anker verbundener Stößel mittels eines Preßstempels mit einer vorbestimmten Kraft beaufschlagt ist.

## Patentansprüche

1. Kalibrierverfahren für ein Magnetventil mit einem über einen Stößel (22) betätigbaren Ventilkörper (18), und einem mit dem Stößel (22) verbundenen Anker (24), der einen Axialspalt mit einem von einer Spulenwicklung (46) umgebenen Gehäusekern (4) begrenzt, **gekennzeichnet durch** die Schritte:
- Aufschieben des Ankers (24) auf den Stößel (22) um ein vorbestimmtes Axialmaß, das derart gewählt ist, daß in der Anlageposition des Ankers (24) an eine Stirnfläche (26) des Gehäusekerns (4) das ventilkörperseitige Ende des Stößels (22) im Abstand zum einzusetzenden Ventilkörper (18) steht;
- Abstützen des Ankers (24) auf eine auf der Stirnfläche (26) des Gehäusekerns (4) angeordneten Distanzscheibe (38), deren Dicke dem Axialspalt entspricht;
- Einschieben des Stößels (22) in den abgestützten Anker (24) mit einer vorbestimmten Einschubkraft (F_{E}), bis er seine Anlageposition am eingesetzten Ventilkörper (18) erreicht;

2. Kalibrierverfahren nach Patentanspruch 1, **dadurch gekennzeichnet, daß** die Einschubkraft (F_{E}) nach Erreichen der Anlageposition auf eine Anlagekraft (F_{A}) erhöht wird, um eine sichere Anlage des Stößels 22 zum Ventilkörper 18 zu garantieren.

3. Kalibrierverfahren nach Patentanspruch 2, **dadurch gekennzeichnet, daß** die Anlagekraft (FA) so gewählt wird, daß der Stößel (22) im Anlagebereich vorgeprägt wird.

4. Kalibrierverfahren nach einem der vorhergehenden Patentansprüche, **dadurch gekennzeichnet, daß** zur Einstellung des Axialmaßes der Anker (24) auf die Gehäusekernstirnfläche (26) aufgelegt wird und der Stößel (22) bis zur Anlage an einen Abstandshalter (30) eingeschoben wird.

5. Kalibrierverfahren nach Patentanspruch 4, **dadurch gekennzeichnet, daß** der Abstandshalter (30) an einer Stirnfläche eines Ventil-Gehäuses (A) abgestützt ist und mit einem Anlagezapfen (32) in eine Stößelaufnahmebohrung (20) eingesetzt wird.

6. Kalibrierverfahren nach einem der vorhergehenden Patentansprüche, **dadurch gekennzeichnet, daß** der Anker (24) eine den rückwärtigen Endabschnitt des Stößels (22) überstreckende Bördelung (54) hat, die zur Lagefixierung des Stößels (22) nach der Kalibrierung umgebördelt werden.

7. Kalibrierverfahren nach einem der vorhergehenden Patentansprüche, **dadurch gekennzeichnet, daß** der Gehäusekern als Polkern (4) ausgebildet ist, der in einen Aufnahmeraum eines Gehäusetopfes (6) eingesetzt wird.

8. Kalibrierverfahren nach Patentanspruch 7, wobei der Polkern (4) ankerseitig im Abstand von einer Polscheibe (50) umgriffen ist, **dadurch gekennzeichnet, daß** beim Einsetzen des Polkerns (4) in den Gehäusetopf (6) die ankerseitigen Stirnflächen von Polscheibe (50) und Polkern (4) bündig ausgerichtet werden.

9. Kalibrierverfahren nach den Patentansprüchen 1 bis 8, **dadurch gekennzeichnet, daß** die Verbindung des Einsatzstückes (14) mit dem Gehäuse (2), der Polscheibe (50) mit dem Gehäusetopf (6) und/oder des Stößels (22) mit dem Anker (24) durch plastische Verformung, vorzugsweise durch Bördeln oder Verstemmen erfolgt.

10. Vorrichtung zur Durchführung des Kalibrierverfahrens für ein Magnetventil nach einem der vorhergehenden Patentansprüche mit einem über einen Stößel (22) betätigbaren Ventilkörper (18), und mit einem mit dem Stößel (22) verbindbaren Anker (24), der einen Axialspalt mit einem von einer Spulenwicklung (46) umgebenen Gehäusekern (4) begrenzt, wobei die Vorrichtung eine Halterung für ein Ventilgehäuse (2) und eine Preßhülse (34) zum Aufschieben des Ankers (24) auf den Stößel (22) um ein vorbestimmtes Axialmaß aufweist, **dadurch gekennzeichnet, daß** das Ventilgehäuse (2) mit einer ventilsitzseitigen Stirnseite auf einer Stützfläche (30) der Halterung abstützbar ist, daß die Vorrichtung weiter einen Abstandshalter (30) zur Abstützung des Stößels (22) an dessen ventilkörperseitigen Ende, eine Distanzscheibe (38) entsprechend einem Axialspalt zwischen Anker (24) und dem dem Ventilkörper (18) abgewandten Ende des Gehäusekerns (4), und einen Preßstempel (40) zum Einschieben des Stößels (22) in den Anker (24) aufweist.

## Claims

1. Calibration method for a solenoid valve with a valve body (18) which can be actuated via a tappet (22) and an armature (24) connected to the tappet (22) that limits an axial clearance to a housing core (4) surrounded by a coil winding (46), **characterised by** the following steps:
- Pressing the armature (24) onto the tappet (22) by a preset axial dimension selected so that with the armature (24) in contact with a front face (26) of the housing core (4) the end of the tappet (22) at the valve body side has a clearance from the opposite valve body (18).
- Supporting of the armature (24) on a spacing washer (38) arranged on the front face (26) of the housing core (4) and having a thickness corresponding to the axial clearance.
- Pressing the tappet (22) into the supported armature (24) using a predetermined press-in force (F_{E}) until it reaches its contact position on the fitted valve body (18).

2. Calibration method according to Claim 1, **characterised in that** the press-in force (F_{E}) is increased to a bearing force (F_{A}) after the contact position is reached, to guarantee secure contact of the tappet (22) with the valve body (18).

3. Calibration method according to Claim 2, **characterised in that** the bearing force (FA) is chosen so that the tappet (22) is pre-stamped in the contact area.

4. Calibration method according to one of the preceding claims, **characterised in that** to set the axial dimension, the armature (24) is placed against the front face of the housing core (26) and the tappet (22) is pushed in until it comes into contact with a distance piece (30).

5. Calibration method according to Claim 4, **characterised in that** the distance piece (30) is supported on a front face of a valve housing (A) and is inserted with a contact pin (32) into a tappet location bore (20).

6. Calibration method according to one of the preceding claims, **characterised in** the armature (24) has a crimping (54) which extends beyond the rearward end section of the tappet (22) which is crimped over after calibration to fix the position of the tappet (22).

7. Calibration method according to one of the preceding claims, **characterised in that** the housing core is designed as a pole core (4) which is inserted into a receiving space of a housing pot (6).

8. Calibration method according to Claim 7, whereby the pole core (4) at the armature end is at a clearance held all round by a pole disk (50), **characterised in that** when the pole core (4) is fitted into the housing pot (6) the front faces of the pole disk (50) and pole core (4) at the armature end are aligned flush.

9. Calibration method according to Claims 1 to 8, **characterised in that** the connection of the insert (14) to the housing (2), of the pole disk (50) to the housing pot (6) and/or of the tappet (22) to the armature (24) is achieved by permanent deformation, preferably by crimping or peening.

10. Device for performing the calibration procedure for a solenoid valve according to one of the preceding patent claims, with a valve body (18) which can be actuated by a tappet (22) and with an armature (24) that can be connected to the tappet (22) which limits an axial clearance from a housing core (4) surrounded by a coil winding (46), whereby the device is a holder for a valve housing (2) and an assembly sleeve (34) for pressing the armature (24) on to the tappet (22) by a predetermined axial dimension, **characterised in that** the valve housing (2) can be supported on a front face at the valve end on a supporting surface (30) of the holder, that the device also has a distance piece (30) for supporting the tappet (22) at its valve body end, a spacing washer (38) corresponding to an axial clearance between the armature (24) and the end of the housing core (4) turned towards the valve body (18) and a punch (40) for pressing the tappet (22) in to the armature (24).

## Revendications

1. Procédé d'étalonnage pour une soupape magnétique comprenant un élément de soupape (18) qui peut être actionné au moyen d'un poussoir (22) et une armature (24) assemblée au poussoir (22), qui délimite une fente axiale avec un noyau de boîtier (4) entouré d'un enroulement de bobine (46), **caractérisé par** les phases suivantes :
- emmancher l'armature (24) sur le poussoir (22) sur une cote axiale prédéterminée qui est choisie de manière que, dans la position de contact de l'armature (24) sur une surface frontale (26) du noyau (4) du boîtier, l'extrémité côté élément de soupape du poussoir (22) se trouve à une distance de l'élément de soupape (18) qui devra être mis en place ;
- mettre l'armature (24) en appui sur une rondelle entretoise (38) dont l'épaisseur correspond à l'entrefer axial, et qui est disposée sur la surface frontale (26) du noyau (4) du boîtier ;
- emmancher le poussoir (22) dans l'armature (24) mise en appui, avec une force d'emmanchement prédéterminée (F_{E}) jusqu'à ce que sa position de contact sur l'élément de soupape (18) mis en place soit atteinte.

2. Procédé d'étalonnage selon la revendication 1, **caractérisé en ce que**, lorsque la position de contact a été atteinte, la force d'emmanchement (F_{E}) est élevée pour être portée à une force de contact (FA) pour garantir la sécurité de la mise en appui du poussoir (22) sur l'élément de soupape (18).

3. Procédé d'étalonnage selon la revendication 2, **caractérisé en ce que** la force de contact (FA) est choisie de manière que le poussoir (22) soit précontraint dans la région de contact.

4. Procédé d'étalonnage selon une des revendications précédentes, **caractérisé en ce que** pour l'établissement de la cote axiale, on pose l'armature (24) sur la surface frontale (26) du noyau de boîtier, et on emmanche le poussoir (22) jusqu'à ce qu'il soit en butée sur une entretoise (30).

5. Procédé d'étalonnage selon la revendication 4, **caractérisé en ce que** l'entretoise (30) est appuyée contre une surface frontale d'un boîtier (A) de la soupape et elle est emmanchée par un téton de contact (32) dans un perçage de réception de poussoir (20).

6. Procédé d'étalonnage selon l'une des revendications précédentes, **caractérisé en ce que** l'armature (24) possède un sertissage (54) qui recouvre le segment terminal arrière du poussoir (22) et qui est serti après l'étalonnage pour l'immobilisation de la position du poussoir (22).

7. Procédé d'étalonnage selon l'une des revendications précédentes, **caractérisé en ce que** le noyau de boîtier constitue un noyau polaire (4) qui est mis en place dans un espace de logement du godet (6) du boîtier.

8. Procédé d'étalonnage selon la revendication 7, dans lequel, sur le côté armature, le noyau polaire (4) est entouré par un disque polaire (50), à un certain écartement, **caractérisé en ce que**, lors de la mise en place du noyau polaire (4) dans le godet (6) du boîtier, les surfaces frontales côté armature du disque polaire (50) et du noyau polaire (4) sont alignées à l'affleurement l'une de l'autre.

9. Procédé d'étalonnage selon les revendications 1 à 8, **caractérisé en ce que** l'assemblage de la pièce rapportée (14) avec le boîtier (2), de la rondelle polaire (50) avec le godet (6) du boîtier et/ou du poussoir (22) avec l'armature (24), s'effectue par déformation plastique, de préférence par sertissage ou matage.

10. Dispositif pour la mise en oeuvre du procédé d'étalonnage pour une soupape magnétique selon l'une des revendications précédentes, comprenant un élément de soupape (18) pouvant être actionné par l'intermédiaire d'un poussoir (22) et une armature (24) qui peut être assemblée au poussoir (22), et qui délimite une fente axiale avec un noyau de boîtier (4) entouré par un enroulement de bobine (46), le dispositif présentant une monture pour un boîtier de soupape (22) et une douille de pression (34) destinée à emboîter l'armature (24) sur le poussoir (22) d'une cote axiale prédéterminée, **caractérisée en ce que** le boîtier de soupape (2) peut être appuyé, par un côté frontal côté siège de soupape, sur une surface d'appui (30) de la monture, et **en ce que** le dispositif comprend en outre une entretoise (30) destinée à donner appui au poussoir (22), à son extrémité côté élément de soupape, une rondelle entretoise (38) qui correspond à une fente axiale entre l'armature (24) et l'extrémité du noyau de boîtier (4) qui est à l'opposé de l'élément de soupape (18), et un poinçon de pression (40) destiné à emmancher le poussoir (22) dans l'armature (24).
